(19) Europäisches Patentamt
European Patent Office
Office européen des brevets

(11) EP 1 856 389 B1

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(51) Int Cl.:
*F02B 37/04* (2006.01)    *F02B 33/44* (2006.01)
*F02D 9/02* (2006.01)    *F02D 9/10* (2006.01)
*F02B 21/00* (2006.01)

(21) Anmeldenummer: 06723110.0

(22) Anmeldetag: **24.02.2006**

(86) Internationale Anmeldenummer:
**PCT/EP2006/001738**

(87) Internationale Veröffentlichungsnummer:
**WO 2006/089780 (31.08.2006 Gazette 2006/35)**

(54) **FRISCHGASVERSORGUNGSEINRICHTUNG FÜR EINE TURBOAUFGELADENE KOLBENBRENNKRAFTMASCHINE**

FRESH GAS SUPPLY DEVICE FOR A TURBOCHARGED PISTON INTERNAL COMBUSTION ENGINE

DISPOSITIF D'ALIMENTATION EN AIR FRAIS POUR UN MOTEUR THERMIQUE A PISTONS A TURBOCOMPRESSEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.02.2005 DE 102005008405
28.10.2005 DE 102005051687**

(43) Veröffentlichungstag der Anmeldung:
**21.11.2007 Patentblatt 2007/47**

(73) Patentinhaber: **KNORR-BREMSE SYSTEME FÜR NUTZFAHRZEUGE GMBH
80909 München (DE)**

(72) Erfinder:
• **NEMETH, Huba
H-1116 Budapest (HU)**
• **PALKOVICS, Lászl
H-1111 Budapest (HU)**

(74) Vertreter: **Mattusch, Gundula
Knorr-Bremse AG,
Patentabteilung,
Moosacher Strasse 80
80809 München (DE)**

(56) Entgegenhaltungen:
EP-A- 0 369 189    DE-A1- 19 944 946
US-A- 4 628 880    US-A1- 2004 177 838

• **PATENT ABSTRACTS OF JAPAN Bd. 1995, Nr. 01, 28. Februar 1995 (1995-02-28) & JP 06 299879 A (MITSUBISHI MOTORS CORP), 25. Oktober 1994 (1994-10-25)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Frischgasversorgungseinrichtung für eine turboaufgeladene Kolbenbrennkraftmaschine mit Frischgasleitungsmitteln, umfassend einen in einen rohrförmigen Innenraum seitlich einmündenden Druckluftanschluss mit Mengenregelvorrichtung, sowie eine ebenfalls im Innenraum angeordnete verstellbare Klappe zur Durchflussregulierung, wobei der Innenraum von einem ersten Endanschluss zur Einströmung sowie einem zweiten Endanschluss zur Ausströmung von Ladeluft eines Abgasturboladers begrenzt ist.

Die Frischgasversorgungseinrichtungen der erfindungsgegenständlichen Art werden zur Unterstützung von Abgasturboladern eingesetzt. Insbesondere im unteren Drehzahlbereich einer turboaufgeladenen Kolbenbrennkraftmaschine kann der angeschlossene Abgasturbolader mangels ausreichender Antriebsenergie meist nicht den erforderlichen Ladedruck leisten. Bemerkbar für den Fahrer machen sich diese Umstände beim Gasgeben aus einer niederen Drehzahl heraus, was als sogenannter Turbolocheffekt bekannt ist. Zur Kompensation dieses Turbolocheffekts wird in der Bedarfssituation zusätzliche Druckluft ausgehend von einem Druckluftvorrat des Kraftfahrzeuges in das Saugrohr der Kolbenkraftmaschine eingegeben. Viele Kraftfahrzeugarten, wie Nutzfahrzeuge oder Omnibusse verfügen sowieso über ein Druckluftnetz, woraus u.a. die pneumatische Bremsanlage gespeist wird.

Aus der WO 2005/064134 A1 geht eine gattungsgemäße Frischgasversorgungseinrichtung für eine turboaufgeladene Kolbenbrennkraftmaschine hervor. Die über einen Abgasturbolader komprimierte Ladeluft gelangt über ein Saugrohr in den Zylinderraum. Seitlich in das Saugrohr mündet weiterhin eine Druckluftleitung ein, welche über ein Ventil elektronisch gesteuert geöffnet oder geschlossen wird. Um den Turbolocheffekt zu kompensieren, wird das Ventil geöffnet, so dass die externe Druckluft, welche hier aus dem Druckluftspeicher des Drucksystems entnommen ist, in den Saugraum gelangt. Um ein Rückströmen dieser zusätzlich eingegebenen Druckluft zu vermeiden, ist in das Saugrohr vor dem Turbolader ein zwangsbetätigtes Rückschlagventil angeordnet.

Als nachteilig bei dieser technischen Lösung erweist sich, dass diese zusätzlichen Frischgasleitungsmittel integraler Bestandteil der Frischgasversorgungseinrichtung sind und motorindividuell ausgelegt sind. Im Reparaturfall ist es somit erforderlich, größere Baueinheiten auszutauschen. Entsprechend aufwendiger ist auch die Konzeption von Varianten mit und ohne Frischgaszuleitungsmitteln bei einer Serie von turboaufgeladenen Kolbenbrennkraftmaschinen.

Aus der US 4 628 880 geht eine Vorrichtung zur Frischgasversorgung für eine turboaufgeladene Kolbenkraftmaschine hervor, bei welcher diese bereits als separates Modul mit entsprechenden Anschlüssen ausgestaltet ist. Nachteilig ist hierbei jedoch, dass die elektrischen Steueranschlüsse dennoch verlegt werden müssen. Ferner ist die Auslegung der Regelung der Frischgasversorgungseinrichtung uneffizient.

Es ist daher die Aufgabe der vorliegenden Erfindung, eine Frischgasversorgungseinrichtung für turboaufgeladene Brennkraftmaschinen zu schaffen, die optional mit Frischgaszuleitungsmitteln ausrüstbar ist, welche universell bei turboaufgeladenen Verbrennungsmotoren einsetzbar sind.

Die Aufgabe wird ausgehend von einer Frischgasversorgungseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Frischgasleitungsmittel in Form eines separaten Moduls ausgebildet sind, an dessen Gehäuse die beiden Endanschlüsse in

Form von Leitungsanschlüssen ausgebildet sind, welche daneben auch als Tragmittel für das Modul geeignet sind.

Ein Vorteil der erfindungsgemäßen Lösung ist, dass turboaufgeladene Kolbenbrennkraftmaschinen sich in einfacher Weise optional hiermit ausstatten lassen. Denn das separate Modul kann bei Bedarf an den Ladeluftkanal angekoppelt werden. Dies eröffnet auch die Möglichkeit einer Nachrüstbarkeit von älteren turboaufgeladenen Kolbenbrennkraftmaschinen ohne jegliche zusätzliche Frischgasleitungsmittel. Dank des modularen Aufbaus können ganz unterschiedliche Frischgasleitungsmittel bereitgestellt werden, welche jeweils passend zu zugeordneten Kolbenbrennkraftmaschinen sind. Somit lassen sich Parameter, wie Durchflussrate an zusätzlicher Druckluft, wirksame Durchmesser am Ventil und dergleichen flexibel an die korrespondierende Kolbenbrennkraftmaschine anpassen.

Vorzugsweise sind die beiden Leitungsanschlüsse am Gehäuse des Moduls nach Art einer Schlauchverbindung ausgebildet, um Schlauchleitungen unter Zuhilfenahme von Schellenmitteln oder dergleichen hieran zu befestigen. Daneben ist es auch möglich, beide Leitungsanschlüsse nach Art einer Rohrverbindung auszubilden, um Rohrleitungen unter Zuhilfenahme von Rohrmuffen hieran zu befestigen.

Alternativ zu den beiden vorstehenden Ausführungsformen ist es ferner denkbar, mindestens eine der beiden Leitungsanschlüsse nach Art eines Flansches auszubilden, um eine Befestigung unter Zuhilfenahme von Schrauben zu ermöglichen. Vorzugsweise sollte der Flansch motorseitig angeordnet sein, so dass über diesen das Modul stabil an der Kolbenbrennkraftmaschine befestigbar ist.

Innerhalb des Gehäuses des Moduls ist vorzugsweise eine Mengenregelvorrichtung zur Ansteuerung des Ventils für die zusätzliche Druckluftzufuhr, eine elektro-mechanische Verstellvorrichtung für die Klappe zur aktiven Steuerung der Klappenstellung sowie eine dieser zugeordnete Positionsermittlungsvorrichtung eingebaut. All diese, den Frischgasleitungsmitteln zugehörigen Elemente lassen sich bauraumsparend in dem Gehäuse integrieren. Außen am Gehäuse ist neben den Druckluftanschlüssen auch mindestens ein elektrischer Anschluss für die ebenfalls im Gehäuse integrierte elektronische Steuereinheit angeordnet. Über den elektrischen Anschluss lässt sich die elektronische Steuereinheit an die Betriebsspannung, sowie beispielsweise einen CAN-Bus der Fahrzeugelektronik anschließen.

Gemäß einer weiteren, die Erfindung verbessernden Maßnahme ist das Gehäuse des Moduls vorzugsweise zweiteilig gestaltet. Unter einen Deckel lässt sich vorzugsweise die integrierte elektronische Steuereinheit von außen her zugänglich anordnen, um beispielsweise Reparatur- und Instandhaltung zu erleichtern.

An die elektronische Steuereinheit ist ein Druckfühler, dessen Druckmesser im rohrartigen Innenraum zwischen Klappe und dem ersten Endanschluss angeordnet ist, sowie auch ein weiterer Anschluss, über welchen ein zweiter Druckfühler im rohrartigen Innenraum zwischen Klappe und dem zweiten Endanschluss angeordnet ist, angeschlossen. Die hierüber gewonnen Druckmesswerte werden gemäß einer Ausführungsform der Erfindung direkt in der elektronischen Steuereinheit ausgewertet, welche zu diesem Zwecke einen Rechner in Form eines Mikroprozessors aufweist, der mit einer entsprechenden Betriebs- und Funktionssoftware arbeitet. Daneben ist es auch möglich, dass die elektronische Steuereinheit ohne einen solchen Rechner ausgestattet ist und lediglich eine Leistungselektronik zur Ansteuerung der Mengenregelvorrichtung sowie der Verstellvorrichtung enthält. Die übrigen Steuerfunktionen können in diesem Fall mittels einer externen Motor- /Fahrzeugelektronik dezentral ausgeführt werden.

Gemäß einer weiteren, die Erfindung verbessernden Maßnahme ist vorgesehen, dass in die Druckluftleitung zur Mengenregelvorrichtung eine austauschbare, strömungsbeeinflussende Drossel eingebaut ist. Über die Wahl der Drossel kann in einfacher Weise auf den Parameter-Durchfluss der Mengenregelvorrichtung Einfluss genommen werden.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:

Fig.1 ein Blockschaltbild einer turboaufgeladenen Kolbenbrennkraftmaschine mit Frischgasversorgungseinrichtung,

Fig.2 eine Blockschaltbilddarstellung der als Modul ausgebildeten Frischgasleitungsmittel der Frischgasversorgungseinrichtung,

Fig.3 eine perspektivische Ansicht des Moduls in einer ersten Ausführungsform,

Fig.4 eine perspektivische Ansicht des Moduls in einer zweiten Ausführungsform,

Fig.5 eine perspektivische, teilweise in Explosionsdarstellung gehaltene Ansicht des Moduls nach Fig.4,

Fig.6 eine perspektivische Ansicht einer dritten Ausführungsform des Moduls.

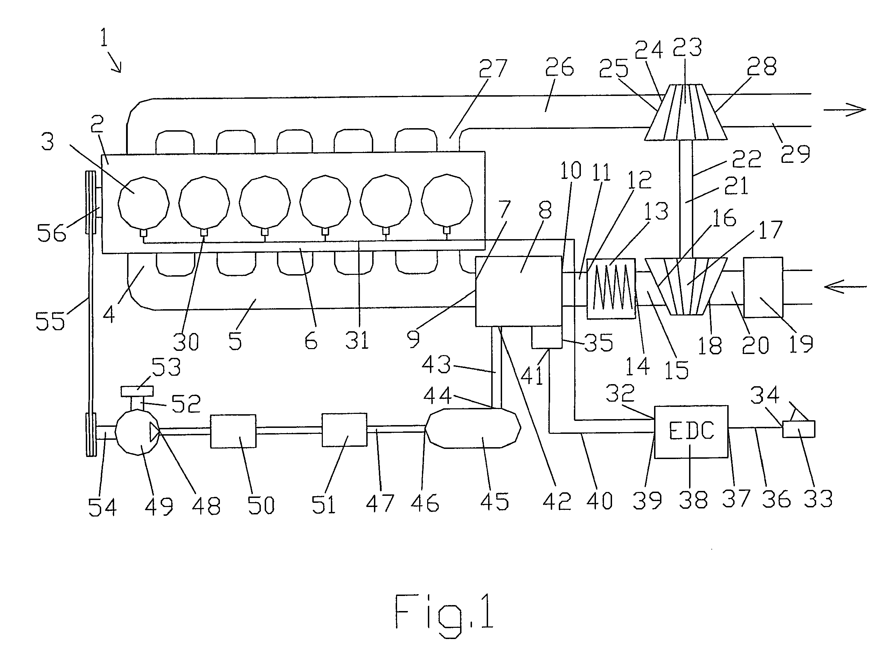

Gemäß Fig.1 umfasst eine Anordnung 1 eine turboaufgeladene Kolbenbrennkraftmaschine 2 mit sechs Zylindern 3 in Reihe, deren Saugleitungen 4 an einer Sammelleitung 5 angeschlossen sind, die einen Anschlussflansch 7 aufweist, woran ein Frischgasleitungsabschnitt-Modul 8 mit seinem zweitem Endanschluss 9 zum Ausströmen angeschlossen ist. Der erste Endanschluss 10 zum Einströmen ist durch eine Leitung 11 mit der Ausströmöffnung 12 des Ladeluftkühlers 13 gekoppelt, deren Einströmöffnung 14 durch eine Leitung 15 mit der Ausströmöffnung 16 des Turbokompressors 17 gekoppelt ist. An die Einströmöffnung 18 des Turbokompressors 17 ist ein Luftfilter 19 mit der Leitung 20 angeschlossen. Der Turbokompressor 17 bildet einen Teil des Abgasturboladers 22, dessen Abgasturbine 23 mit seiner Einströmöffnung 24 an die Ausströmöffiiung 25 des Auspuffsammelrohrs 26 angeschlossen ist. Der Turbokompressor 17 und die Abgasturbine 23 sind an der Welle 21 befestigt. Die Zylinder 3 sind durch Auspuffleitungen 27 an das Auspuffsammelrohr 26 angeschlossen. Die Ausströmöffnung 28 der Abgasturbine 23 ist mit dem Abgasrohr 29 zusammengekoppelt.

Die Kraftstoffversorgung der Zylinder 3 erfolgt durch die Einspritzdüsen 30, deren Regelung durch die Leitung 31 vom ersten Anschluss 32 der elektronischen Steuereinheit 38 durchgeführt wird. An den Anschluss 37 der elektronischen Steuereinheit 38 ist der Anschluss 34 eines Gaspedals 33 durch die Leitung 36 angeschlossen. Das Gaspedal 33 ist mit einem Betätigungsorgan versehen, das in an sich bekannter Weise vom Fahrer des Kraftfahrzeugs betätigt wird. Der elektrische/elektronische Anschluss 39 der elektronischen Steuereinheit 38 ist durch die Sammelleitung 40 mit dem elektrischen/ elektronischen Anschluss 41 der elektronischen Steuereinheit 35 des Frischgasleitungsabschnitt-Moduls 8 zusammengekoppelt.

Das Frischgasleitungsabschnitt-Modul 8 besitzt einen Druckluftanschluss 42, der durch die Leitung 43 an den Auslassanschluss 44 des Druckluftbehälters 45 angeschlossen ist. Der Speiseanschluss 46 des Druckluftbehälters 45 ist durch die Leitung 47 an den Druckluftanschluss 48 des Druckluftkompressors 49 angeschlossen. In der Leitung 47 sind Druckregler 50 und Lufttrockner 51 eingebaut. Der Druckluftkompressor 49 besitzt einen Saugstutzen 52, der mit einem Luftfilter 53 versehen ist. Die Welle 54 des Druckluftkompressors 49 ist durch Riemenantrieb 55 mit der Hauptwelle 56 des turboaufgeladenen Dieselmotors des Kraftfahrzeugs verbunden.

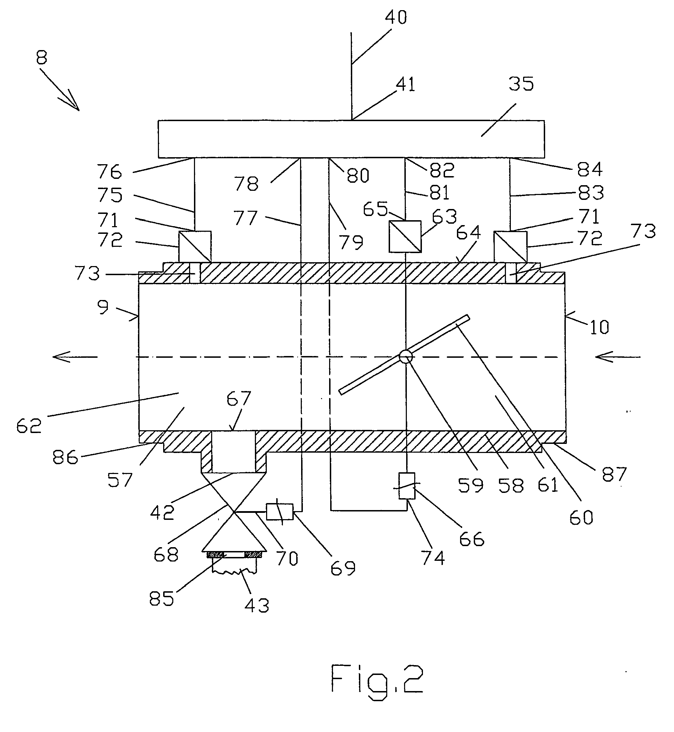

In Fig.2 ist das Modul 8 als solches ausführlich dargestellt, welches rohrartig ausgebildet ist, und den ersten Endanschluss 10 sowie den zweiten Endanschluss 9 besitzt, zwischen denen ein Innenraum 57 besteht, der einen Kreisquerschnitt aufweist, dessen Durchmesser $D$ ist. Der Strömungsdurchmesser für Nutzfahrzeug- und Omnibusmotoren kann mit der folgenden empirischen Formel berechnet werden:

$$D[mm] = 11 \cdot V[l]^{0.5} \cdot p[bar]^{0.5} + 35,$$

wobei $V$ der Hubraum in Liter ist und $p$ ist der maximale absolute Ladedruck in bar. Bei einer Motorbaureihe ist der Hubraum gegeben. Die Leistungsgruppen sind dann typisch durch die Ladedruckeinstellung ausgeführt. Der bei einer Motorbaureihe verwendete, vom maximalen Ladedruck gegebene Durchmesser bestimmt die vorzugsweise gewählte Modulgrösse, die dann die ganze Motorbaureihe abdecken kann. Der Innenraum 57 ist zweckmäßig durch die Wand 58 umschlossen, worin die Welle 59 einer Klappe 60 gelagert und hindurchgeführt ist. Die Klappe 60 teilt den Innenraum 57 auf in zwei Teile, nämlich den Einströmraum 61, der zwischen dem ersten Endanschluss 10 und der Klappe 60 entsteht, sowie den Ausströmraum 62, der zwischen dem zweiten Endanschluss 9 und der Klappe 60 entsteht.

Die Klappe 60 hat eine geschlossene und eine voll geöffnete Endstellung, sowie beliebige Zwischenstellungen, die durch Verdrehen der Welle 59 eingestellt werden. Die Verstellvorrichtung 66 ist in diesem Ausführungsbeispiel als elektrischer Motor ausgebildet und mit einem elektrischen Verstellvorrichtungsanschluss 74 ausgerüstet, der durch eine Leitung 79 mit dem ersten Anschluss 80 der elektronischen Steuereinheit 35 angeschlossen ist. Durch den Verstellvorrichtungsanschluss 74 wird die Verstellvorrichtung 66 mit Strom versorgt; von dem Anschluss 65 des Positionsermittlungssensors 63 wird ein Signal über die Lage der Klappe 60 entnommen; der Anschluss 65 ist wiederum durch eine Leitung 81 an den Anschluss 82 der elektronischen Steuereinheit 35 des Moduls 8 angeschlossen.

In der Wand 58 ist weiterhin eine Druckluft-Einströmöffnung 67 zwischen dem zweiten Endanschluss 9 und der Klappe 60 ausgebildet, woran der Druckluftanschluss 42 angeschlossen ist, der mit einer Mengenregelvorrichtung 68 ausgerüstet ist. Die Mengenregelvorrichtung 68 weist auch eine voll gesperrte Stellung auf. Der elektrische Steuerungsanschluss 69 der Mengenregelvorrichtung 68, die ein Ventil 70 aufweist, ist an den Anschluss 78 der elektronischen Steuereinheit 35 des Moduls 8 mittels der Leitung 77 angeschlossen.

An den Anschluss 76 der elektronischen Steuereinheit 35 ist der Anschluss 71 des Druckfühlers 72 - der an der Wand 58 befestigt ist - über die Leitung 75 angekoppelt; der Druckmesser 73 des Druckfühlers 72 ist in den Ausströmraum 62 des Frischgasleitungsabschnitts-Moduls 8 hineingesteckt. Ein ähnlicher Anschluss 71 des Druckfühlers 72 - der an der Wand 58 befestigt ist - ist über die Leitung 83 an den Anschluss 84 des Moduls 35 angekoppelt. Der Druckmesser 73 des Druckfühlers 72 ist in den Einströmraum 61 des Moduls 8 hineingesteckt.

Die elektronische Steuereinheit 35 des Moduls 8 ist mit einem Anschluss 41 versehen, woran die Sammelleitung 40 angeschlossen ist. Die Sammelleitung 40 ist als eine Kommunikationsleitung ausgebildet, die an die - nicht dargestellte - Motorelektronik angekoppelt ist, welche eine zentrale Steuereinheit (ECU) umfasst, die mit entsprechenden Softwares versehen ist.

Das Frischgasleitungsabschnitt-Modul 8 ist an beiden Enden mit Leitungsanschlüssen 86 und 87 versehen, die geeignet sind für einen dichtenden Einbau in die Leitung 11, durch die die Frischgasversorgung des turboaufgeladenen Dieselmotors geleistet wird. Die Leitungsanschlüssen 86 und 87 sind so ausgebildet, dass sie für die Befestigung des Frischgasleitungsabschnitts-Moduls 8 geeignet sind.

Die Mengenregelvorrichtung 68 weist eine austauschbare Drossel 85 bei der Einströmöffnung auf, wodurch die Durchströmmenge begrenzt, bzw. modular zur Motorgröße angepasst wird.

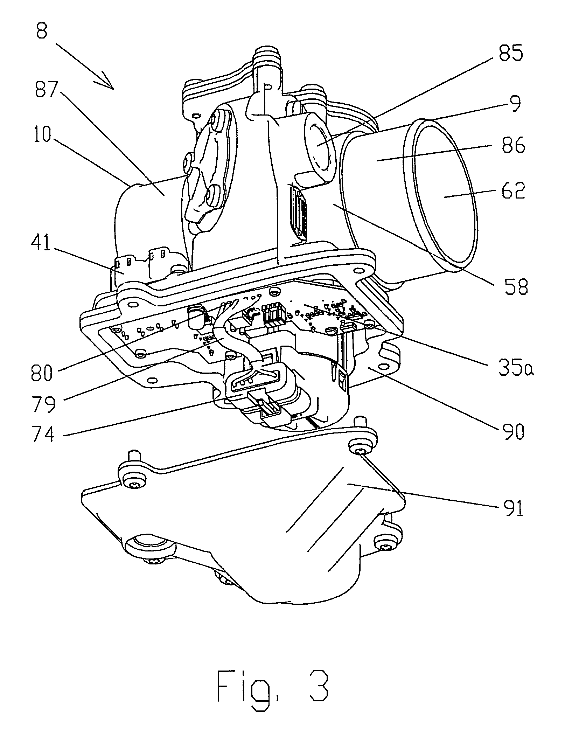

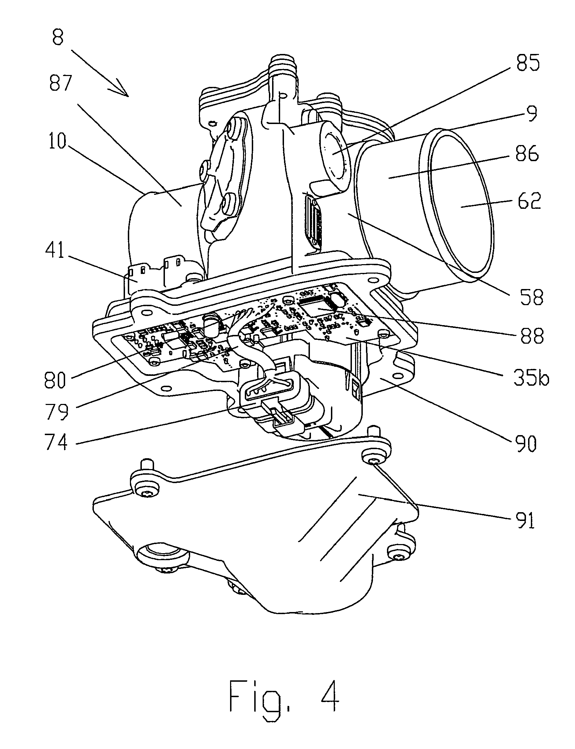

Auch die elektronische Steuereinheit 35 ist modular austauschbar ausgebildet, wobei Fig.3 und Fig.4 zwei unterschiedliche Varianten zeigen:

In Fig.3 ist der untere Deckel 91 der Anschlussfläche 90 des Gehäuses 89 des Frischgasleitungsabschnitt-Moduls 8 entfernt dargestellt. Hier ist die elektronische Steuereinheit 35a ohne eigenen Rechner und Software ausgerüstet.

In Fig.4 ist die elektronische Steuereinheit 35b dagegen mit einem eigenen Rechner 88 und Software ausgerüstet. Die Software wird über den Anschluss 41 in den Rechner 88 abgespeichert.

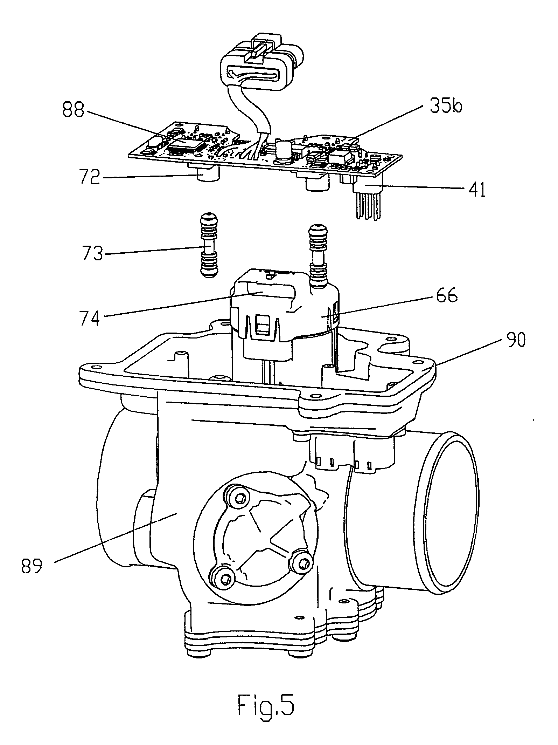

Die Fig.5 zeigt eine weitere Variante der elektronischen Steuereinheit 35b, wobei diese die elektrischen/elektronischen Drucksensoren 72 und die Druckfühler 73 enthält, die als kurze Rohrstücke ausgebildet sind, welche im Gehäuse 89 befestigt sind.

Die Software des Rechners 88 koordiniert die Betätigung des Ventils 70 und der Klappe 60. Bei normalen Drehzahlen entsteht etwa 30 bis 40 ms Verzögerung bei der Betätigung der Klappe 60, obwohl die Verzögerung bei der Betätigung des Ventils 70 nur 10 ms beträgt. Deswegen erhält die Mengenregelvorrichtung 68 des Ventils 70 genau dann einen Betätigungsimpuls, wenn die Klappe 60 fast zu ist, so dass zusätzliche Druckluft tatsächlich erst dann einströmt, wenn die Klappe 60 soeben geschlossen ist. Zur Ermittlung des Betätigungszeitpunktes des Ventils 70 wird die aktuelle Position der Klappe 60 sensortechnisch durch den Positionsermittlungssensors 63 festgestellt und im Rechner 88 verarbeitet.

Bei unteren Drehzahlen erhält die Mengenregelvorrichtung 68 des Ventils 70 seinen Betätigungsimpuls im Vergleich zu den vorstehenden Betriebsbedingungen früher, so dass noch etwas zusätzliche Druckluft durch die Leitung 11 in Richtung Turbokompressor 17 zurückströmen kann und somit der Ladedruck begrenzt wird.

In einem Lkw oder Omnibus wird die Druckluft von einem Druckluftbehälter 45 entnommen und der Druckluftanschluss 42 und die Leitung 43 werden nach den technischen Vorschriften der Bremsanlagen ausgebildet. Es ist zweckmäßig, das Ventil 70 auch nach diesen Anforderungen auszubilden. Geeignet ist ein elektrisch betätigtes, sogenanntes ABS-Ventil der Bremsanlage. Im Motorraum kann platzsparend eine Anordnung installiert werden, bei der die Druckluftleitung 43 mit Drossel 85 und der Innenraum 57 eine parallele geometrische Achse aufweisen, weil parallel zur Leitung 11 im Allgemeinen genügend Raum verfügbar ist.

Das Modul 8 wird für verschiedene Dieselmotoren-Kategorien in Modul Bauweise ausgebildet. Die in großen Serien hergestellten Motoren werden in Hubraum-Kategorien eingestuft, bzw. bestimmte Hubraumgrößen werden gebaut, wonach die Steuer und Versicherungsstufen gewählt werden. Es ist in der Motorentechnik üblich, dass die höchste Geschwindigkeit der Frischluft einen bestimmten Wert nicht überschreiten darf. So gehört zu einer Hubraumgröße ein hierauf abgestimmter Durchmesser der Frischgasleitung. Durch die Modulbauweise können bestimmte Durchmesser stufenweise für die Einströmöffnung 10 bzw. Ausströmöffnung 9 gewählt werden. Dazu gehören stufenweise bestimmte Durchmesser für die Rohranschlüsse zum Einbau in die Leitung 11.

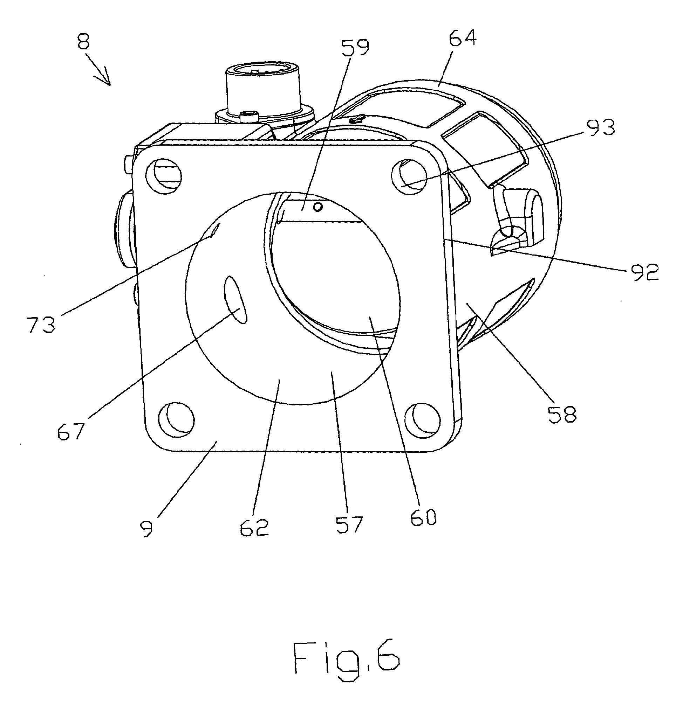

Fig.6 zeigt die Flansch-Variante des Moduls 8, dessen zweiter Endanschluss "Ausströmung" im Gegensatz zu den beiden vorstehend beschriebenen Ausführungsbeispielen als Flansch 92 ausgebildet ist, der einstückig am Gehäuse 89 angeformt ist und mit Bohrungen 93 für nicht dargestellte Befestigungsschrauben versehen ist. Hierüber lässt sich das Modul 8 an den Sammelleitung 5 anflanschen.

**Bezugszeichen**

| | |
|---|---|
| 1 | Anordnung |
| 2 | Kolbenbrennkraftmaschine |
| 3 | Zylinder |
| 4 | Saugleitung |
| 5 | Sammelleitung |
| 6 | Zylinderblock |
| 7 | Anschlussflansch |
| 8 | Frischgasleitungsabschnitt-Modul |
| 9 | zweiter Endanschluss "Ausströmung" |
| 10 | erster Endanschluss "Einströmung" |
| 11 | Leitung |
| 12 | Ausströmöffnung |
| 13 | Ladeluftkühler |
| 14 | Einströmöffnung |
| 15 | Leitung |
| 16 | Ausströmöffnung |
| 17 | Turbokompressor |
| 18 | Einströmöffnung |
| 19 | Luftfilter |
| 20 | Leitung |
| 21 | Welle |
| 22 | Abgasturbolader |
| 23 | Abgasturbine |
| 24 | Einströmöffnung |
| 25 | Ausströmöffnung |
| 26 | Auspuffsammelrohr |
| 27 | Auspuffleitung |
| 28 | Ausströmöffnung |
| 29 | Abgasrohr |
| 30 | Einspritzdüsen |
| 31 | Leitung |
| 32 | Anschluss |
| 33 | Gaspedal |
| 34 | Anschluss |
| 35 | elektronische Steuereinheit |
| 35a | elektronische Steuereinheit (ohne Rechner) |
| 35b | elektronische Steuereinheit (mit Rechner) |
| 36 | Leitung |
| 37 | Anschluss |
| 38 | elektronische Steuereinheit des Dieselmotors |
| 39 | Anschluss |
| 40 | Sammelleitung |
| 41 | Anschluss |
| 42 | Druckluftanschluss |
| 43 | Leitung |
| 44 | Auslassanschluss |
| 45 | Druckluftbehälter |
| 46 | Speiseanschluss |
| 47 | Leitung |
| 48 | Druckluftanschluss |
| 49 | Druckluftkompressor |
| 50 | Druckregler |
| 51 | Lufttrockner |
| 52 | Saugstutzen |
| 53 | Luftfilter |
| 54 | Welle |
| 55 | Riemenantrieb |
| 56 | Hauptwelle |
| 57 | Innenraum |
| 58 | Wand |
| 59 | Welle |
| 60 | Klappe |
| 61 | Einströmraum |
| 62 | Ausströmraum |
| 63 | Positionsermittlungssensor |

| 64 | Außenfläche |
| 65 | Anschluss |
| 66 | Verstellvorrichtung |
| 67 | Druckluft-Einströmöffnung |
| 68 | Mengenregelvorrichtung |
| 69 | elektrischer Steueranschluss |
| 70 | Ventil |
| 71 | Anschluss |
| 72 | Druckfühler |
| 73 | Druckmesser |
| 74 | Verstellvorrichtungsanschluss |
| 75 | Leitung |
| 76 | Anschluss |
| 77 | Leitung |
| 78 | Anschluss |
| 79 | Leitung |
| 80 | Anschluss |
| 81 | Leitung |
| 82 | Anschluss |
| 83 | Leitung |
| 84 | Anschluss |
| 85 | Drossel |
| 86 | Leitungsanschluss |
| 87 | Leitungsanschluss |
| 88 | Rechner |
| 89 | Gehäuse |
| 90 | Anschlussfläche |
| 91 | Deckel |
| 92 | Flansch |
| 93 | Bohrung |

**Patentansprüche**

1. Frischgasversorgungseinrichtung für eine turboaufgeladene Kolbenkraftmaschine (2) mit Frischgasleitungsmitteln, umfassend einen in einen rohrförmigen Innenraum (57) seitlich einmündenden Druckluftanschluss (42) mit Mengenregelvorrichtung (68), sowie eine im Innenraum (57) angeordnete verstellbare Klappe (60) zur Durchflussregulierung, wobei der Innenraum (57) von einem ersten Endanschluss (10) zur Einströmung sowie einem zweiten Endanschluss (9) zur Ausströmung von Ladeluft eines Abgasturboladers (22) begrenzt ist, wobei die Frischgasleitungsmittel in Form eines separaten Moduls (8) ausgebildet sind, an dessen Gehäuse (89) die beiden Endanschlüsse (9, 10) in Form von Leitungsanschlüssen (86, 87) ausgebildet sind, welche daneben auch als Tragmittel für das Modul geeignet sind, **dadurch gekennzeichnet, dass** außen am Gehäuse (89) ein elektrischer Anschluss (41) für eine integrierte elektronische Steuereinheit (35) angeordnet ist, und dass an die elektronische Steuereinheit (35) zum einen der Anschluss (71) eines ersten Druckfühlers (72), dessen Druckmesser (73) im rohrartigen Innenraum (61) zwischen Klappe (60) und dem ersten Endanschluss (10) angeordnet ist, und zum anderen der Ausgang (71) eines zweiten Druckfühlers (72), dessen Druckmesser (73) im rohrartigen Innenraum (62) zwischen Klappe (60) und dem zweiten Endanschluss (9) angeordnet ist, angeschlossen sind.

2. Frischgasversorgungseinrichtung nach Anspruch 1, **dadurch gekennzeichnet, dass** beide Leitungsanschlüsse (86, 87) nach Art einer Schlauchverbindung ausgebildet sind, um Schlauchleitungen unter Zuhilfenahme von Schellenmitteln hieran zu befestigen.

3. Frischgasversorgungseinrichtung nach Anspruch 1, **dadurch gekennzeichnet, dass** beide Leitungsanschlüsse (86, 87) nach Art einer Rohrverbindung ausgebildet sind, um Rohrleitungen unter Zuhilfenahme von Rohrmuffen hieran zu befestigen.

4. Frischgasversorgungseinrichtung nach Anspruch 1, **dadurch gekennzeichnet, dass** mindestens einer der Leitungsanschlüsse (86, 87) nach Art eines Flansches ausgebildet ist, um eine Befestigung unter Zuhilfenahme von Schrauben zu ermöglichen.

5. Frischgasversorgungseinrichtung nach Anspruch 1, **dadurch gekennzeichnet, dass** für die Mengenregelvorrichtung (68) für die zusätzliche Druckluft eine Verstellvorrichtung (66) für die Klappe (60), sowie eine dieser zugeordneten Positionsermittlungsvorrichtung (63) innerhalb des Gehäuses (89) eingebaut sind.

6. Frischgasversorgungseinrichtung nach Anspruch 5, **dadurch gekennzeichnet, dass** das Gehäuse (89) eine Anschlussfläche (90) besitzt, an welcher ein Deckel (91) lösbar befestigt ist, worunter eine elektronische Steuereinheit (35; 35a; 35b) angeordnet ist, **die zumindest die Mengenregelvorrichtung (68) und die Verstellvorrichtung (66)** ansteuert.

7. Frischgasversorgungseinrichtung nach einem der vorstehenden Ansprüche, **dadurch gekennzeichnet, dass** an den elektrischen Anschlüssen (71, 69, 74, 65) die gegenseitigen elektrischen Anschlüsse (76, 78, 80, 82, 84) der elektronischen Steuereinheit (35) angeschlossen sind.

8. Frischgasversorgungseinrichtung nach Anspruch 1, **dadurch gekennzeichnet, dass** die elektronische Steuereinheit (35b) einen Rechner (88) aufweist, welcher eine Betriebs- und Funktionssoftware beinhaltet.

9. Frischgasversorgungseinrichtung nach Anspruch 1, **dadurch gekennzeichnet, dass** die elektronische Steuereinheit (35a) nur eine Leistungselektronik zur Ansteuerung aufweist, wobei die übrige Steuerung mittels einer externen Motor-/Fahrzeugelektronik realisierbar ist.

10. Frischgasversorgungseinrichtung nach Anspruch 1, **dadurch gekennzeichnet, dass** in der Druckluftleitung (43) zur Mengenregelvorrichtung (68) eine austauschbare, strömungsbeeinflussende Drossel (85) eingebaut ist.

11. Frischgasversorgungseinrichtung nach Anspruch 10, **dadurch gekennzeichnet, dass** die Druckluftleitung (43) mit Drossel (85) und der Innenraum (57) parallele geometrische Achse aufweisen.

## Claims

1. Fresh-gas supply device for a turbo-charged displacement prime mover (2) with fresh-gas duct means, comprising a compressed-air port (42) opening laterally into a tubular interior space (57), which includes a flow-rate controller (68), as well as an adjustable flap (60) disposed in said interior space (57) for flow-rate control, with said interior space (57) being limited by a first terminal connector (10) for inflow as well as by a second terminal connector (9) for out-flow of charge-air from an exhaust-gas turbocharger (22), with said fresh-gas conduit means being configured in the form of a separate module (8) having a casing (89) on which said two terminal connectors (9, 10) are configured in the form of duct connectors (86, 87) which are additionally also suitable as means supporting said module, **characterised in that** a power connector (41) for an integrated electronic controller (35) is disposed on the outside on said casing (89) and that, on the one hand, the connector (71) of a first pressure-sensing means (72), whose pressure-gauging capsule (73) is disposed in the tubular interior space (61) between said flap (60) and said first terminal connector (10), and, on the other hand, the output (71) of a second pressure-sensing means (72), whose pressure-gauging capsule (73) is disposed in said tubular interior space (62) between said flap (60) and said second terminal connector (9), are connected to said electronic controller (35).

2. Fresh-gas supply device according to Claim 1, **characterised in that** both duct connectors (86, 87) are designed in the manner of a hose connection for fastening hose assemblies thereon by means of clip means.

3. Fresh-gas supply device according to Claim 1, **characterised in that** both duct connectors (86, 87) are designed in the manner of a tubular joint for fastening pipe lines thereon by means of couplers.

4. Fresh-gas supply device according to Claim 1, **characterised in that** at least one of said duct connectors (86, 87) is designed in the form of a flange for permitting attachment by means of screws.

5. Fresh-gas supply device according to Claim 4, **characterised in that** for said flow-rate controller (68) for the additional compressed air, an adjusting device (66) for said flap (60) as well as a position detector device (63) associated therewith are mounted inside said casing (89).

6. Fresh-gas supply device according to Claim 5, **characterised in that** said casing (89) is provided with a connecting area (90) on which a cover (91) is detachably fastened, underneath which an electronic controller (35; 35a; 35b) is disposed that controls at least said flow-rate controller (68) and said adjusting device (66).

7. Fresh-gas supply device according to any of the preceding Claims, **characterised in that** the mutual electrical terminals (76, 78, 80, 82, 84) of said electronic controller (35) are connected to said connectors (71, 69, 74, 65).

8. Fresh-gas supply device according to Claim 1, **characterised in that** said electronic controller (35b) is provided with a computer (88) that comprises an operating and functional software.

9. Fresh-gas supply device according to Claim 1, **characterised in that** said electronic controller (35a) comprises only a single power electronic system for control, with the remaining control functions being adapted to be implemented by means of an external engine/vehicle electronic system.

10. Fresh-gas supply device according to Claim 1, **characterised in that** an exchangeable flow-controlling throttle (85) is installed in said compressed-air duct (43) leading to said flow-rate controller (68).

11. Fresh-gas supply device according to Claim 10, **characterised in that** said compressed-air duct (43) with said throttle (85) and said interior space (57) present parallel geometric axes.

## Revendications

1. Dispositif d'alimentation en gaz frais pour un moteur à combustion interne à piston à une turbosoufflante de gaz d'échappement (2) ayant des moyens de conduit de gaz frais, comprenant un raccord d'alimentation en air comprimé (42), qui s'ouvre du côté dans un espace intérieur tubulaire (57), qui renferme un dispositif régulateur de débit (68), ainsi qu'un clapet réglable (60) disposé dans ledit espace intérieur (57) pour le réglage du débit, audit espace intérieur (57) étant limité par un premier raccord terminal (10) pour l'entrée ainsi que par un deuxième raccord terminal (9) pour la sortie de l'air de suralimentation d'une turbosoufflante de gaz d'échappement (22), auxdits moyens de conduit de gaz frais étant configurés sous forme d'un module séparé (8) ayant un boîtier (89) sur lequel sont configurés lesdits deux raccords terminaux (9, 10) sous forme de raccords de conduit (86, 87), qui sont également aptes à faire fonction de moyens d'appui dudit module, **caractérisé en ce qu'**une connexion électrique (41) pour une unité de commande électronique intégré (35) est disposée du côté extérieur audit boîtier (89), et **en ce que**, d'un côté, ledit connecteur (71) d'un premier moyen capteur de pression (72), dont la capsule dynamométrique (73) est disposée dans ledit espace intérieur tubulaire (61) entre ledit clapet (60) et ledit premier raccord terminal (10), et, d'autre côté, la sortie (71) d'un deuxième moyen capteur de pression (72), dont la capsule dynamométrique (73) est disposé dans ledit espace intérieur tubulaire (62) entre ledit clapet (60) et ledit deuxième raccord terminal (9), sont à ladite unité de commande électronique (35).

2. Dispositif d'alimentation en gaz frais selon la revendication 1, **caractérisé en ce que** lesdits deux raccords de conduit (86, 87) sont configurés sous forme d'un raccord pour tuyaux flexibles pour y raccorder des conduites en tuyaux moyennant des moyens de collier.

3. Dispositif d'alimentation en gaz frais selon la revendication 1, **caractérisé en ce que** lesdits deux raccords de conduit (86, 87) sont configurés sous forme d'un raccord de tuyauterie pour y raccorder des conduites moyennant des moyens de collier.

4. Dispositif d'alimentation en gaz frais selon la revendication 1, **caractérisé en ce qu'**au moins un desdits raccords de conduit (86, 87) est conçu sous forme d'une bride à permettre la fixation par vissage.

5. Dispositif d'alimentation en gaz frais selon la revendication 4, **caractérisé en ce que**, pour ledit dispositif régulateur de débit (68) pour ledit air comprimé supplémentaire, un dispositif régulateur (66) pour ledit clapet (60) ainsi qu'un dispositif détecteur de position (63) y affecté sont installés à l'intérieur dudit boîtier (89).

6. Dispositif d'alimentation en gaz frais selon la revendication 5, **caractérisé en ce que** ledit boîtier (89) est pourvu d'une aire de raccord (90), sur lequel s'attache, de façon démontable, un couvercle (91), au-dessous duquel est disposée une unité de commande électronique (35; 35a; 35b), qui commande au moins ledit dispositif régulateur de débit (68) et ledit dispositif régulateur (66).

7. Dispositif d'alimentation en gaz frais selon une quelconque des revendications précédentes, **caractérisé en ce que** les connecteurs électriques mutuels (76, 78, 80, 82, 84) de ladite unité de commande électronique (35) sont raccordés auxdits connecteurs (71, 69, 74, 65).

8. Dispositif d'alimentation en gaz frais selon la revendication 1, **caractérisé en ce que** ladite unité de commande électronique (35b) est pourvue d'un ordinateur (88), qui comprend du logiciel général et fonctionnel.

9. Dispositif d'alimentation en gaz frais selon la revendication 1, **caractérisé en ce que** ladite unité de commande électronique (35a) ne comprend qu'un seul système électronique de puissance, aux autres fonctions de commande étant apte à se réaliser moyennant un système électronique de moteur/véhicule extérieur.

10. Dispositif d'alimentation en gaz frais selon la revendication 1, **caractérisé en ce qu'**un clapet d'étranglement échangeable pour le réglage du débit (85) est monté dans ledit conduit d'air comprimé (43) menant vers ledit dispositif régulateur de débit (68).

11. Dispositif d'alimentation en gaz frais selon la revendication 10, **caractérisé en ce que** ledit conduit d'air comprimé (43), ensemble avec ledit clapet d'étranglement (85), et ledit espace intérieur (57) présentent des axes géométriques en parallèle.

Fig.1

Fig.2

Fig. 3

8

87

10

41

80

79

74

85

9

86

62

58

88

35b

90

91

Fig. 4

Fig.5

Fig.6

**EP 1 856 389 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005064134 A1
- US 4628880 A